# EUROPEAN PATENT APPLICATION

(11) **EP 4 759 526 A1**
(43) Date of publication of application: **17.06.2026**
(21) Application number: 25222533.9
(22) Date of filing: 11.12.2025
(51) Int. Cl.: B29C 70/48, B29C 33/00

(54) **SEALS AND METHODS FOR RESIN TRANSFER INFUSION**

(30) Priority: 12.12.2024 US 202463733199 P
(71) Applicant: The Boeing Company, Arlington, VA 22202 (US)
(72) Inventor: Bello, Carlos, Arlington, 22202 (US); Belcher, Stephen L., Arlington, 22202 (US)
(74) Representative: Witte, Weller & Partner Patentanwälte mbB

(57) **Abstract**

Methods of resin transfer infusion and maintaining a clean resin infusion tool, a seal, and a resin infusion tool are presented. A resin infusion tool comprises a first mold; a second mold configured to form a resin infusion chamber with the first mold, wherein the second mold comprises at least one channel around a perimeter of the second mold; and at least one seal seated within the at least one channel of the second mold, the at least one seal is seated so as to maintain a vacuum seal between the first mold and the second mold in both a infusion position and a closed position of the resin infusion tool, wherein the seal is in contact with the first mold in the infusion position, and wherein the seal is compressed in the closed position. (Fig. 3)

## Description

### BACKGROUND INFORMATION

### 1. Field:

The present disclosure relates generally to composite manufacturing and more specifically to gap resin transfer infusion.

### 2. Background:

In gap resin transfer infusion, resin is introduced into a resin infusion chamber between an upper mold and a lower mold when the resin infusion tool is in a infusion position. The resin is forced into a dry preform within the resin infusion chamber by moving the upper mold downward towards the lower mold and into a closed position.

The resin infusion chamber in the resin infusion tool remains sealed in the two different positions. Conventional resin transfer molding tool design uses circular solid elastomeric extrusions. The extrusions are often butt-joined and sealed with sealing tape which needs to be removed and cleaned after each cycle. Conventional seals are typically replaced every cycle. Additionally, resin flash and debris are cleaned from the resin infusion tool for every cycle.

The seal replacement and tool cleaning undesirably contribute additional time between cycles. The seal replacement adds undesirable resource costs.

Therefore, it would be desirable to have a method and apparatus that takes into account at least some of the issues discussed above, as well as other possible issues. For example, it would be desirable to provide reusable seals for resin transfer molding.

### SUMMARY

An embodiment of the present disclosure provides a seal configured to maintain pressure in at least two different positions. The seal comprises a polymeric material in an extruded cross-sectional shape, the cross-sectional shape comprising a substantially flat first end and a projection opposite the substantially flat first end. The cross-sectional shape may comprise a pentagon in an uncompressed state, the pentagon comprising the substantially flat first end and the projection. The cross-sectional shape may comprise a base comprising the substantially flat first end and two substantially parallel sides. The projection may comprise a rounded top. The projection may comprise an angle between two top faces.

Another embodiment of the present disclosure provides a resin infusion tool. The resin infusion tool comprises a first mold; a second mold configured to form a resin infusion chamber with the first mold, wherein the second mold comprises at least one channel around a perimeter of the second mold; and at least one seal seated within the at least one channel of the second mold, where the at least one seal is seated so as to maintain a vacuum seal between the first mold and the second mold in a infusion position of the resin infusion tool in which the seal is in contact with the first mold and in a closed position of the resin infusion tool in which the seal is compressed. The seal may comprise a cross-sectional shape comprising a substantially flat first end and a projection opposite the substantially flat first end. The resin infusion tool may further comprise at least one groove within the first mold configured to interface with the projection. The cross-sectional shape may comprise a pentagon in an uncompressed state, the pentagon comprising the substantially flat first end and the projection. A base of the seal may have substantially the same cross-sectional shape as a cross-sectional shape of the channel. A cross-sectional shape of seal may comprise a base comprising a substantially flat first end and two substantially parallel sides. The second mold may have a flash formation region formed in close proximity to the first mold, and wherein the seal has a cross-sectional shape configured to compress into the flash formation region.

Yet another embodiment of the present disclosure provides a method of resin transfer infusion. A dry fiber preform is placed between a first mold of a resin infusion tool and a second mold of the resin infusion tool, wherein the resin infusion tool comprises a seal seated within a channel of the second mold. The first mold of the resin infusion tool is placed into contact with the seal to a infusion position of the resin infusion tool. Vacuum is pulled within a resin infusion chamber between the second mold and the first mold while the resin infusion tool is in the infusion position. Resin is injected into the resin infusion chamber while under vacuum. The resin infusion tool is closed to a closed position to infuse the resin into the dry fiber preform while under vacuum to form a resin infused fiber preform, wherein the seal is compressed in the closed position. The method may further comprise curing the resin infused fiber preform with the resin infusion chamber while the resin infusion tool is in the closed position to form a cured part. The method may further comprise lifting the first mold away from the second mold after curing the resin infused fiber preform; and demolding the cured part and connected resin flash from the second mold. Closing the resin infusion tool to a closed position may deform the seal into a flash formation region of the second mold. Lifting the first mold away from the second mold may return the seal to an original cross-sectional shape.

A further embodiment of the present disclosure provides a method of maintaining a clean resin infusion tool. A resin infusion tool is closed to a closed position to infuse resin into a dry fiber preform within a resin infusion chamber between an first mold and a second mold of the resin infusion tool to form a resin infused fiber preform, wherein closing the resin infusion tool to the closed position forms a flash formation region. The resin infused fiber preform is cured with the resin infusion chamber while the resin infusion tool is in the closed position to form a cured part. The first mold is lifted away from the second mold after curing the resin infused fiber preform. The cured part and connected resin flash are demolded from the second mold. Closing the resin infusion tool to a closed position may further comprise compressing a seal between the first mold and the second mold into the flash formation region. The method may further comprise closing the resin infusion tool to the closed position to infuse resin into a second dry fiber preform.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is a cross-sectional view through a seal in a portion of a resin infusion tool in an open position in accordance with an illustrative embodiment;
**Figure 4** is a cross-sectional view through a seal in a portion of a resin infusion tool in a infusion position in accordance with an illustrative embodiment;
**Figure 5** is a cross-sectional view through a seal in a portion of a resin infusion tool in a infusion position in accordance with an illustrative embodiment;
**Figure 6** is a cross-sectional view through a seal in a portion of a resin infusion tool in a closed position in accordance with an illustrative embodiment;
**Figure 7** is a cross-sectional view through a seal in a portion of a resin infusion tool in an open position after resin infusion in accordance with an illustrative embodiment;
**Figure 8** is a cross-sectional view through a seal in a portion of a resin infusion tool in an open position after resin infusion in accordance with an illustrative embodiment;
**Figure 9** is a cross-sectional view through a seal in a portion of a resin infusion tool in an open position in accordance with an illustrative embodiment;
**Figure 10** is a cross-sectional view through a seal in a portion of a resin infusion tool in a closed position in accordance with an illustrative embodiment;
**Figure 11** is a cross-sectional view through a seal in a portion of a resin infusion tool in an open position in accordance with an illustrative embodiment;
**Figure 12** is a cross-sectional view through a portion of a resin infusion tool with seals visible in accordance with an illustrative embodiment;
**Figure 13** is a cross-sectional view through a portion of a resin infusion tool with seals visible in accordance with an illustrative embodiment;
**Figure 14** is a cross-sectional view through a portion of a resin infusion tool with seals visible in accordance with an illustrative embodiment;
**Figure 15** is a flowchart of a method of resin transfer infusion in accordance with an illustrative embodiment;
**Figure 16** is a flowchart of a method of maintaining a clean resin infusion tool in accordance with an illustrative embodiment;
**Figure 17** is an illustration of an aircraft manufacturing and service method in a form of a block diagram in accordance with an illustrative embodiment; and
**Figure 18** is an illustration of an aircraft in a form of a block diagram in which an illustrative embodiment may be implemented.

### DETAILED DESCRIPTION

The illustrative examples recognize and take into account several considerations. The illustrative examples recognize and take into account that current State-of-the-art resin transfer molding (RTM) tool design replaces the seals after the part is cured so that the tool can be cleaned from thin resin flash debris.

The illustrative examples recognize and take into account that typical resin transfer molding tool design use circular solid elastomeric extrusions. The illustrative examples recognize and take into account that seal ends are normally butt-joined. The illustrative examples recognize and take into account that the diameter used to cope with gap-resin infusion process is large and used in conjunction with a "dove tail" groove to keep the seal in place. The illustrative examples recognize and take into account that no other feature maintains the seal within the groove and achieves vacuum. The illustrative examples recognize and take into account that the conventional circular seal cross-section is meant to be deformed in the groove where the resin easily fills the corners before the injection is taking place. The illustrative examples recognize and take into account that this resin is then removed when the seal is replaced.

The illustrative examples recognize and take into account that to avoid potential leaks, tools often feature a double groove where a second "safety" seal is installed. The illustrative examples recognize and take into account that the butt joints on typical extrusions are normally placed on opposite locations to avoid sealing failure.

The illustrative examples recognize and take into account that three-surface joints are typically points of failure where seals ends are normally physically butt-joined. The butt-joints include additional considerations and disposable materials (like sealing tape) to ensure vacuum integrity.

The illustrative examples enable Gap-Resin Infusion parts to be manufactured in high-rate scenarios. The illustrative examples recognize and take into account that high-rate manufacturing aims to avoid resin debris and reuse the seals to reduce takt time and cut process cost.

The illustrative examples avoid resin debris by designing resin flash that is thick enough that it does not break off during demolding. At the same time, the seal withstands multiple cure cycles without being damaged. The illustrative examples present methods of resin transfer infusion, seals, and a resin infusion tool for avoiding resin debris.

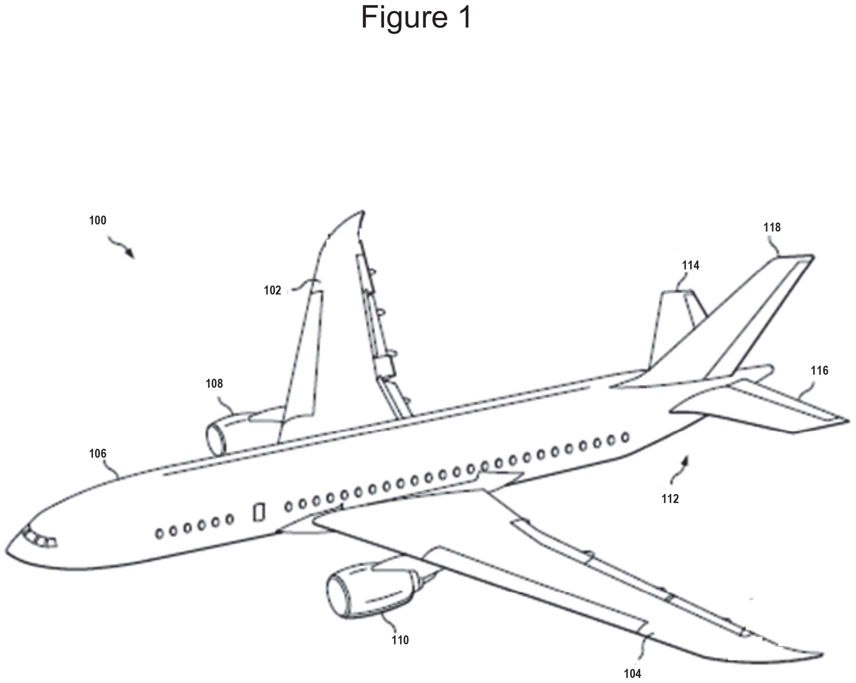

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have composite parts manufactured using the illustrative examples. In some illustrative examples, at least a portion of wing **102,** wing **104,** or body **106** can be manufactured using the illustrative examples.

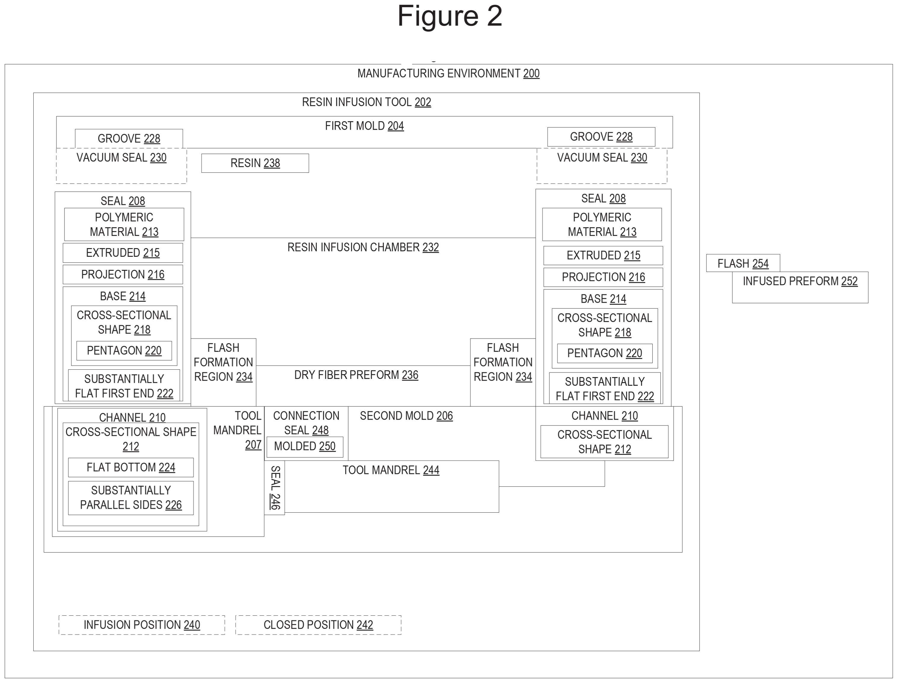

Turning now to **Figure 2****,** an illustration of a block diagram of a manufacturing environment is depicted in accordance with an illustrative embodiment. Resin infusion tool **202** in manufacturing environment **200** can be used to form a composite part of aircraft **100** of **Figure 1****.**

Resin infusion tool **202** comprises first mold **204,** second mold **206** configured to form resin infusion chamber **232** with first mold **204,** and seal **208** seated within channel **210** of second mold **206.** second mold **206** comprises channel **210** around a perimeter of second mold **206.** Seal **208** is configured to maintain vacuum seal **230** between first mold **204** and second mold **206** in both infusion position **240** and closed position **242** of resin infusion tool **202.** Seal **208** is in contact with first mold **204** in infusion position **240,** and seal **208** is compressed in closed position **242.** Seal **208** is seated so as to maintain vacuum seal **230** between first mold **204** and second mold **206** in both infusion position **240** and closed position **242** of resin infusion tool **202.** Seal **208** is in contact with first mold **204** in infusion position **240,** and seal **208** is compressed in closed position **242.** Additionally, seal **208** is designed to maintain vacuum seal **230** between first mold **204** and second mold **206** in both infusion position **240** and closed position **242** of resin infusion tool **202.** Seal **208** is in contact with first mold **204** in infusion position **240,** and seal **208** is compressed in closed position **242.**

Resin infusion chamber **232** can be referred to as a sealed chamber. First mold **204** can take the form of either an upper mold or a lower mold. In this nonlimiting illustrative example, first mold **204** is depicted as an upper mold and second mold **206** is a lower mold. Second mold **206** can take the form of either an upper mold or lower mold. As second mold **206** can be either an upper mold or lower mold, seal **208** can be present in either an upper mold or a lower mold.

Seal **208** is configured to seal resin infusion chamber **232** for application of vacuum in both closed position **242** and infusion position **240.** In some illustrative examples, seal **208** is configured to seal resin infusion chamber **232** in infusion position **240** without compression.

Infusion position **240** can also be referred to as a gap infusion position or a gap position. The terms gap infusion position or gap position may be used interchangeably with infusion position **240.** Closed position **242** can also be referred to as a curing position. The term curing position may be used interchangeably with closed position **242.**

Seal **208** comprises cross-sectional shape **218.** In some illustrative examples, cross-sectional shape **218** comprises substantially flat first end **222** and projection **216** opposite substantially flat first end **222.** Base **214** with substantially flat first end **222** is seated within channel **210** of second mold **206.** In some illustrative examples, base **214** of seal **208** has substantially the same cross-sectional shape as cross-sectional shape **212** of channel **210.** In these illustrative examples, cross-sectional shape **218** is substantially the same as cross-sectional shape **212.** In some illustrative examples, cross-sectional shape **212** comprises flat bottom **224** and substantially parallel sides **226.**

In some illustrative examples, cross-sectional shape **218** is pentagon **220** in an uncompressed state, pentagon **220** comprises substantially flat first end **222** and projection **216.** Cross-sectional shape **218** comprises base **214** with substantially flat first end **222** and two substantially parallel sides.

Projection **216** takes any desirable form. In some illustrative examples, projection **216** comprises a rounded top. In some illustrative examples, projection **216** comprises an angle between two top faces. Projection **216** provides for sealing with first mold **204** without displacement or deformation of large volume of seal **208.**

Seal **208** is configured to maintain pressure in at least two different positions, infusion position **240** and closed position **242.** Seal **208** comprises polymeric material **213** in extruded **215** cross-sectional shape **218.** Cross-sectional shape **218** comprises a substantially flat first end **222** and projection **216** opposite substantially flat first end **222.**

In some illustrative examples, seal **208** is a full ring vulcanized. Having a full vulcanized ring and providing groove **228** can enable a better seal position control when it is subjected to vacuum and resin injection pressures. The design of seal **208** and optional use of groove **228** avoids the use of a large "dove tail" groove.

In some illustrative examples, resin infusion tool **202** further comprises at least one groove, groove **228,** within first mold **204** configured to interface with projection **216.** Groove **228** takes any desirable shape. Groove **228** can substantially mirror a shape of projection **216.** In some illustrative examples, groove **228** provides a direction for deformation of seal **208** in closed position **242.**

Seal **208** and other features of resin infusion tool **202** are configured to reduce or eliminate cleaning time for resin infusion tool **202** between infusion of each dry fiber preform. Seal **208** is configured to be reusable for multiple resin infusions. Seal **208** is configured to be reusable for infusion of multiple dry fiber preforms.

Resin infusion tool **202** is configured to form a thick flash, flash **254,** on infused preform **252.** During infusion of resin **238,** resin **238** is infused into dry fiber preform **236.** Excess amounts of resin **238** is present in flash formation region **234.** In this illustrative example, second mold **206** has flash formation region **234** formed in close proximity to first mold **204.** In some illustrative examples, seal **208** has cross-sectional shape **218** configured to compress into flash formation region **234** in closed position **242.** Flash formation region **234** is configured to form a thick flash, flash **254,** that will be removed from resin infusion tool **202** with infused preform **252.** Flash **254** is thick enough to not break or shatter upon removal from resin infusion tool **202.** The design of flash formation region **234** reduces or eliminates cleaning time for resin infusion tool **202.**

In this illustrative example, first mold **204** is depicted as an upper mold and second mold **206** is depicted as a lower mold. In some illustrative examples, channel **210** is present in an upper mold. In other illustrative examples, channel **210** is present in a lower mold. In some illustrative examples, an upper mold comprises one piece. In some illustrative examples, a lower mold comprises more than one tool mandrel. Second mold **206** can comprise any desirable quantity of tool mandrels. In some illustrative examples, second mold **206** comprises one tool mandrel. In some illustrative examples, second mold **206** comprises multiple tool mandrels. When second mold **206** comprises multiple tool mandrels, seals are present between each tool mandrel for sealing resin infusion tool **202.**

As depicted, second mold **206** comprises tool mandrel **207** and tool mandrel **244.** In this illustrative example, channel **210** extends across both tool mandrel **207** and tool mandrel **244.** In this illustrative example, seal **208** extends across both tool mandrel **207** and tool mandrel **244.** Seal **208** can be referred to as a horizontal seal. When second mold **206** comprises multiple tool mandrels, the seals between the tool mandrels, such as seal **246** between tool mandrel **207** and tool mandrel **244** can be referred to as vertical seals. The horizontal seal, seal **208** is configured to seal in two different positions. Second mold **206** is sealed in a closed position prior to beginning infusion of resin **238.** The vertical seal can be a conventional seal configured to seal in a single closed position.

To maintain vacuum seal **230,** connection seals are present to seal the vertical seals to the horizontal seals. In this illustrative example, connection seal **248** is present in resin infusion tool **202.** Connection seal **248** connects seal **208** to seal **246** to maintain vacuum seal **230** between first mold **204** and second mold **206.** In some illustrative examples, connection seal **248** is molded **250.** Connection seal **248** takes a shape configured to maintain vacuum seal **230.**

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, in some illustrative examples, second mold **206** comprises more than two tool mandrels. In other illustrative examples, second mold **206** comprises a single tool mandrel. In other illustrative examples, seal **208** is present in a channel in first mold **204** while a groove configured to interface with projection **216** is present in second mold **206.**

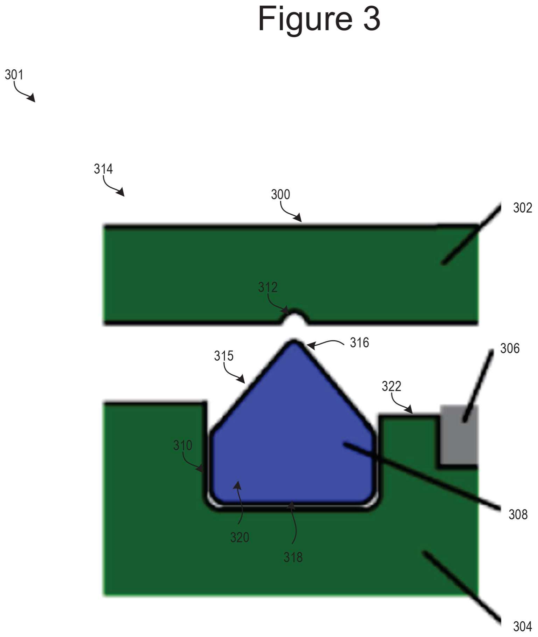

Turning now to **Figure 3****,** a cross-sectional view through a seal in a portion of a resin infusion tool in an open position is depicted in accordance with an illustrative embodiment. Resin infusion tool **300** is a physical implementation of resin infusion tool **202 of** **Figure 2****.**

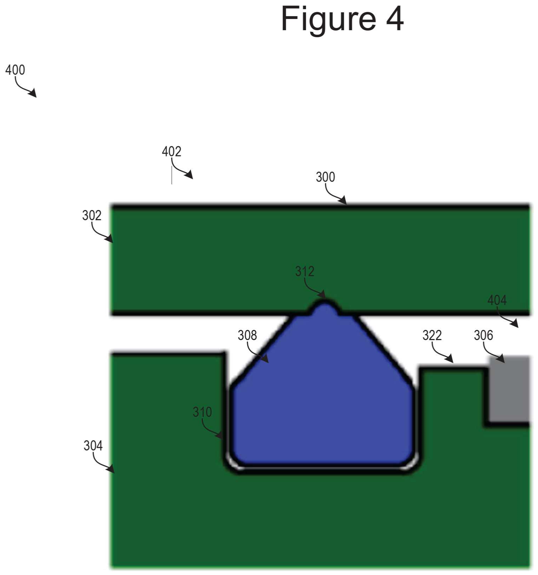

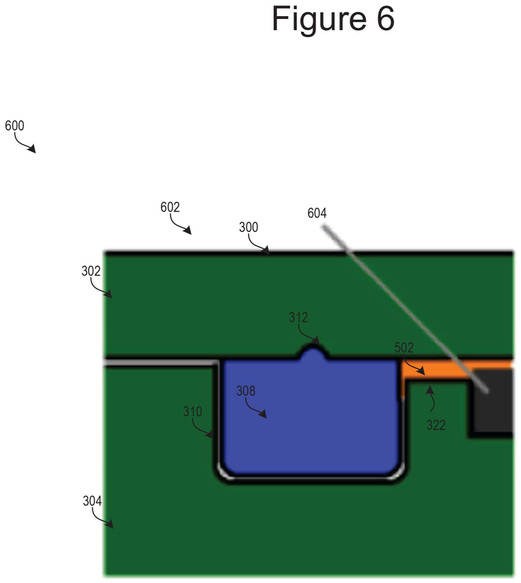

Resin infusion tool **300** comprises upper mold **302,** lower mold **304** configured to form a resin infusion chamber with upper mold **302,** and seal **308** seated within channel **310** of lower mold **304.** Lower mold **304** comprises channel **310** around a perimeter of lower mold **304.** Seal **308** is configured to maintain a vacuum seal between upper mold **302** and lower mold **304** in a infusion position, such as infusion position **402** of **Figure 4****,** of resin infusion tool **300.** Seal **308** is also configured to maintain the vacuum seal between upper mold **302** and lower mold **304** in a closed position, such as closed position **602** of **Figure 6****.**

Seal **308** comprises cross-sectional shape **315** comprising a substantially flat first end **318** and projection **316** opposite substantially flat first end **318.** In this illustrative example, resin infusion tool **300** comprises groove **312** within upper mold **302** configured to interface with projection **316.** In this illustrative example, cross-sectional shape **315** is a pentagon in the depicted uncompressed state. The pentagon comprises substantially flat first end **318** and projection **316.**

Base **320** of seal **308** has substantially the same cross-sectional shape as a cross-sectional shape of channel **310.** As base **320** substantially fills channel **310,** resin does not enter channel **310** during resin infusion.

In this illustrative example, a cross-sectional shape of channel **310** has a flat bottom and substantially parallel sides. To substantially fill channel **310,** seal **308** has substantially parallel sides in base **320** to fill channel **310.**

Lower mold **304** has flash formation region **322.** Resin will flow to flash formation region **322** during resin infusion of dry preform **306.** Seal **308** has cross-sectional shape **315** configured to compress into flash formation region **322** in a closed position, such as closed position **602** of **Figure 6****.**

Turning now to **Figure 4****,** a cross-sectional view through a seal in a portion of a resin infusion tool in a infusion position is depicted in accordance with an illustrative embodiment. View **400** is a view of infusion position **402.** In infusion position **402,** seal **308** of resin infusion tool **300** is in contact with upper mold **302.** Seal **308** vacuum seals upper mold **302** to lower mold **304** in infusion position **402.** Vacuum sealing upper mold **302** to lower mold **304** forms resin infusion chamber **404.** Dry preform **306** is sealed within resin infusion chamber **404** for resin infusion.

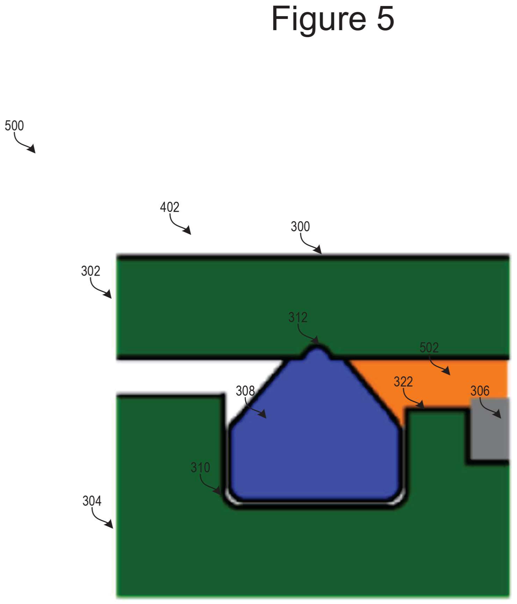

Turning now to **Figure 5****,** a cross-sectional view through a seal in a portion of a resin infusion tool in a infusion position is depicted in accordance with an illustrative embodiment. View **500** is a view of resin infusion tool **300** during introduction of resin **502** into resin infusion chamber **404** of resin infusion tool **300.**

Turning now to **Figure 6****,** a cross-sectional view through a seal in a portion of a resin infusion tool in a closed position is depicted in accordance with an illustrative embodiment. In view **600** resin infusion tool **300** is in closed position **602.** In closed position **602** of resin infusion tool **300** in which seal **308** is compressed.

In view **600** resin **502** has been driven into the preform to form infused preform **604.** Excess amounts of resin **502** are present in flash formation region **322.** Seal **308** blocks the excess resin from entering channel **310.** In some illustrative examples, seal **308** is deformed to extend into a portion of flash formation region **322.**

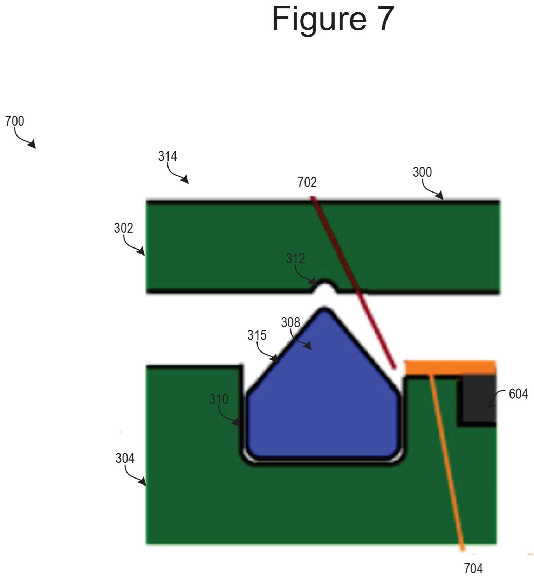

Turning now to **Figure 7****,** a cross-sectional view through a seal in a portion of a resin infusion tool in an open position after resin infusion is depicted in accordance with an illustrative embodiment. View **700** is a view of resin infusion tool **300** in open position **314.** In view **700** seal **308** has returned to cross-sectional shape **315.** By pulling away from excess resin **502,** gap **702** is present between seal **308** and flash **704.** Flash **704** is formed of a thick amount of resin **502.** Flash **704** is attached to infused preform **604.**

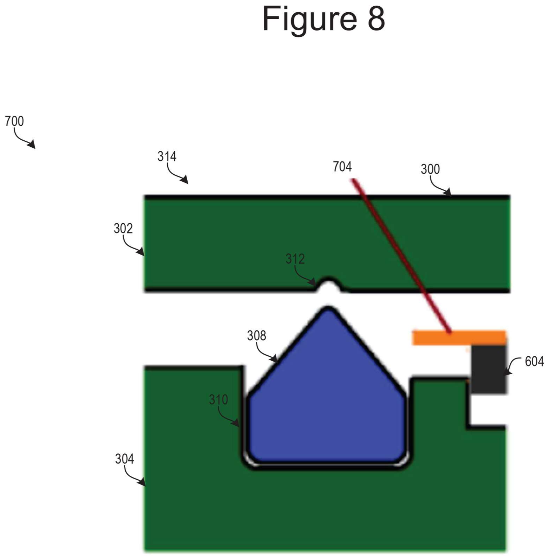

Turning now to **Figure 8****,** a cross-sectional view through a seal in a portion of a resin infusion tool in an open position after resin infusion is depicted in accordance with an illustrative embodiment. In view **800** infused preform **604** and flash **704** is lifted out of resin infusion tool **300.** By lifting infused preform **604** and flash **704** out of resin infusion tool **300,** resin infusion tool **300** is left clean. Resin is not left on lower mold **304,** including channel **310.**

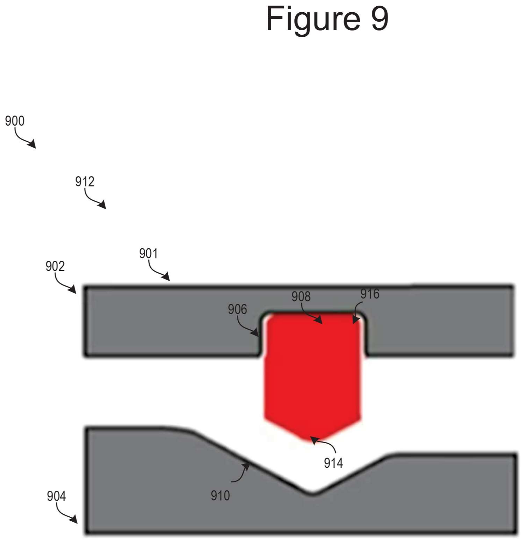

Turning now to **Figure 9****,** a cross-sectional view through a seal in a portion of a resin infusion tool in an open position is depicted in accordance with an illustrative embodiment. Resin infusion tool **901** is a physical implementation of resin infusion tool **202** of **Figure 2****.** Resin infusion tool **901** can be used to form composite parts of aircraft **100** of **Figure 1****.**

View **900** is a view of resin infusion tool **901** in open position **912.** In this illustrative example, resin infusion tool **901** comprises upper mold **902** and lower mold **904.** Seal **908** is present within channel **906** of upper mold **902.**

Resin infusion tool **901** comprises upper mold **902,** lower mold **904** configured to form a resin infusion chamber with upper mold **902,** and seal **908** seated within channel **906** of upper mold **902.** Upper mold **902** comprises channel **906** around a perimeter of upper mold **902.** Seal **908** is configured to maintain a vacuum seal between upper mold **902** and lower mold **904** in a infusion position and a closed position of resin infusion tool **901.**

Seal **908** comprises a cross-sectional shape comprising a substantially flat first end and projection **914** opposite the substantially flat first end. In this illustrative example, resin infusion tool **901** comprises groove **910** within lower mold **904** configured to interface with projection **914.** In this illustrative example, the cross-sectional shape comprises a pentagon in an uncompressed state, the pentagon comprises the substantially flat first end and projection **914.**

Base **916** of seal **908** has substantially the same cross-sectional shape as a cross-sectional shape of channel **906.** As base **916** substantially fills channel **906,** resin does not enter channel **906** during resin infusion.

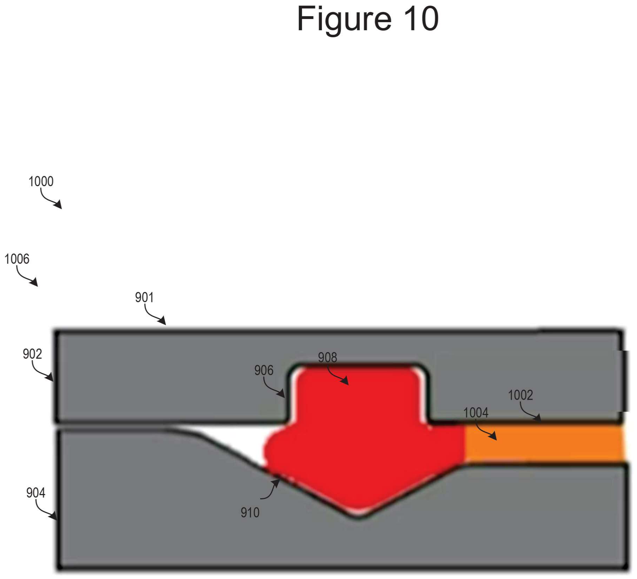

Turning now to **Figure 10****,** a cross-sectional view through a seal in a portion of a resin infusion tool in a closed position is depicted in accordance with an illustrative embodiment. View **1000** is a view of resin infusion tool **901** is in closed position **1006.** In closed position **1006,** resin **1004** has been introduced to resin infusion tool **901** to infuse a dry preform (not depicted). Resin **1004** is present in flash formation region **1002.** In this illustrative example, seal **908** has been deformed by movement of at least one of upper mold **902** or lower mold **904** into closed position **1006.**

With seal **908** engaged against groove **910** in lower mold **904,** seal **908** has deformed into flash formation region **1002.** Seal **908** has a cross-sectional shape configured to compress into flash formation region **1002** in closed position **1006.**

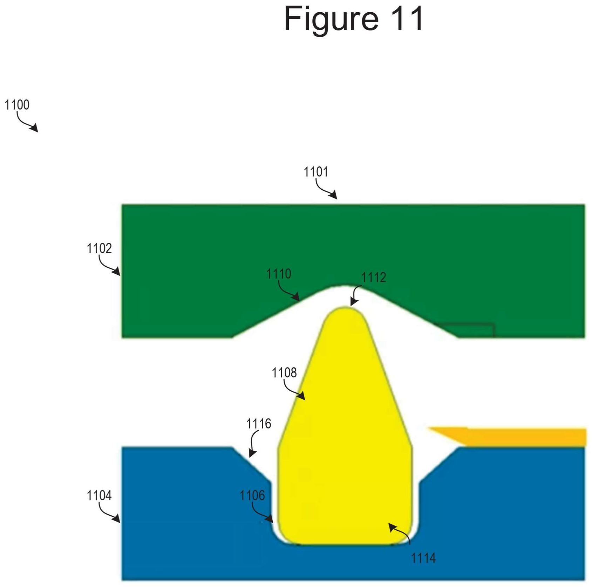

Turning now to **Figure 11****,** a cross-sectional view through a seal in a portion of a resin infusion tool in an open position is depicted in accordance with an illustrative embodiment. Resin infusion tool **1101** is a physical implementation of resin infusion tool **202** of **Figure 2****.** Resin infusion tool **1101** can be used to form composite parts of aircraft **100** of **Figure 1****.**

View **1100** is a view of resin infusion tool **1101** in an open position after performing a resin infusion. In this illustrative example, resin infusion tool **1101** comprises upper mold **1102** and lower mold **1104.** Channel **1106** within lower mold **1104** holds seal **1108.** Seal comprises base **1114** have a substantially same cross-section as channel **1106.** Seal further comprises projection **1112.** In this illustrative example, projection **1112** is rounded. Groove **1110** is present in upper mold **1102** and configured to interface with projection **1112.**

In this illustrative example, lower mold **1104** comprises bevel **1116** around channel **1106.** Bevel **1116** can accommodate seal **1108** when it is deformed by movement of resin infusion tool **1101** to a closed position.

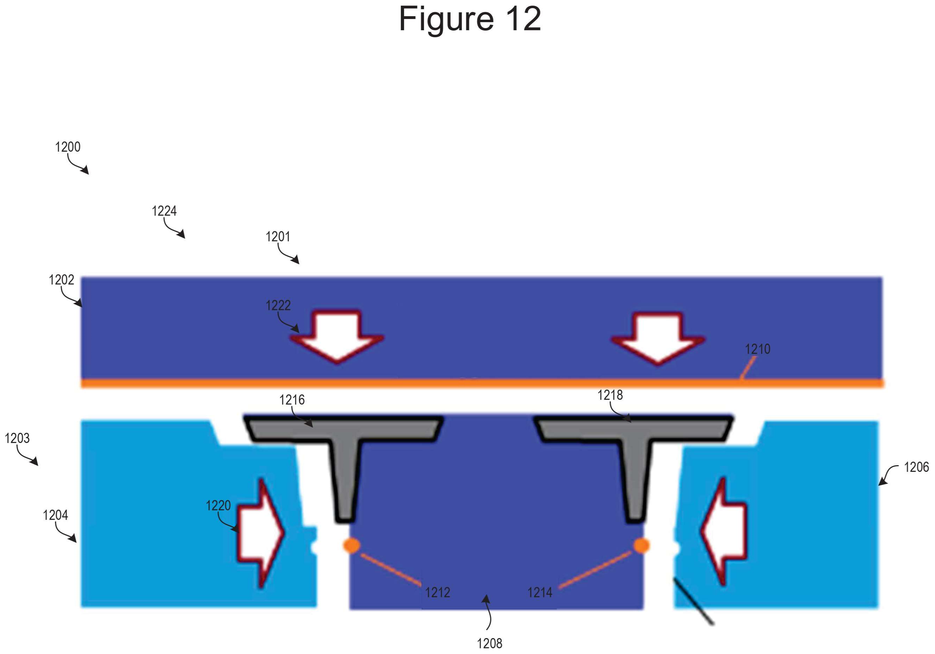

Turning now to **Figure 12****,** a cross-sectional view through a portion of a resin infusion tool with seals visible is depicted in accordance with an illustrative embodiment. Resin infusion tool **1201** is a physical implementation of resin infusion tool **202** of **Figure 2****.** Resin infusion tool **1201** can be used to form composite parts of aircraft **100** of **Figure 1****.**

In this illustrative example, resin infusion tool **1201** comprises upper mold **1202** and lower mold **1203.** In this illustrative example, lower mold **1203** comprises tool mandrel **1204,** tool mandrel **1206,** and tool mandrel **1208.** Resin infusion tool **1201** is in open position **1224.**

In this illustrative example, conventional seals are present between the lower molds. The lower seals comprise seal **1212** between tool mandrel **1204** and tool mandrel **1208** and seal **1214** between tool mandrel **1208** and tool mandrel **1206.** The lower molds are closed completely prior to resin infusion. The lower molds are closed by moving in directions **1220.**

In this illustrative example, seal **1210** is a physical implementation of seal **208** of **Figure 2****.** Seal **1210** is configured to maintain a resin infusion chamber in resin infusion tool **1201** in both a infusion position and a closed position. The resin infusion chamber is formed by moving upper mold **1202** in direction **1222** towards lower mold **1203.** In this illustrative example, seal **1210** is connected to upper mold **1202.**

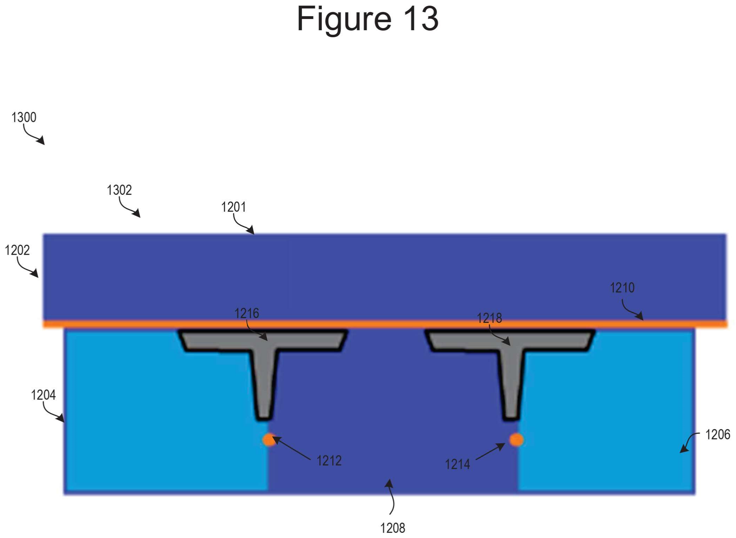

Turning now to **Figure 13****,** a cross-sectional view through a portion of a resin infusion tool with seals visible is depicted in accordance with an illustrative embodiment. In view **1300,** resin infusion tool **1201** is in closed position **1302.** In closed position **1302,** tool mandrel **1204** is sealed to tool mandrel **1208** by seal **1212.** In closed position **1302,** tool mandrel **1206** is sealed to tool mandrel **1208** by seal **1214.** Seal **1212** and seal **1214** will be connected to seal **1210** by a connection seal (not depicted).

Although seal **1212** and seal **1214** can be commercially available seals, seal **1210** and the connection seal are specific to the illustrative examples. Seal **1210** is an extruded seal while connection seal is a molded seal.

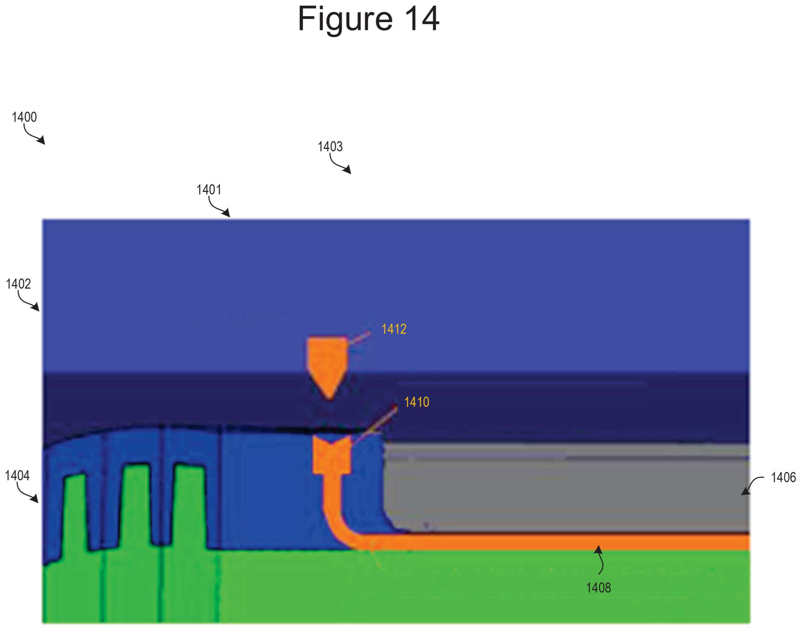

Turning now to **Figure 14****,** a cross-sectional view through a portion of a resin infusion tool with seals visible is depicted in accordance with an illustrative embodiment. Resin infusion tool **1401** is a physical implementation of resin infusion tool **202** of **Figure 2****.** In some illustrative examples, resin infusion tool **1401** can be the same as resin infusion tool **1201** of **Figure 12****.** In some illustrative examples, resin infusion tool **1401** can be the same as resin infusion tool **300** of **Figures 3-8****.** In some illustrative examples, resin infusion tool **1401** can be the same as resin infusion tool **901** of **Figures 9-10****.**

View **1400** is a view of resin infusion tool **1401** with upper mold **1402** separated from lower mold **1404** in open position **1403.** Dry preform **1406** is present in resin infusion tool **1401.** The interaction of the seals is displayed in view **1400.** Seal **1408** is a vertical seal sealing different tool mandrels of lower mold **1404.** Seal **1408** can be a conventional seal. Seal **1412** is an extruded seal having a cross-section configured to maintain a vacuum seal in both a infusion position and a closed position. Seal **1412** can be a physical implementation of seal **208** of **Figure 2****.** Connection seal **1410** is an implementation of connection seal **248** of **Figure 2****.**

The illustrative examples provide a seal-seal joint solution that enables Gap-Resin Infusion processing where movable curing mandrels are included in the tool. In this illustrative example, lower mold **1404** comprises movable curing mandrels with seal **1408.**

The illustrative examples enable complex seal joints to work under typical Gap-Resin Infusion processing. The illustrative examples provide a molded seal end, connection seal **1410,** for an extrusion, seal **1408,** that physically connects with the main Gap Seal, seal **1412,** in the tool during vacuum, infusion and compression cycles. The molded seal, connection seal **1410,** can be vulcanized to one end of seal **1408.** Connection seal **1410** contributes to the resin flash being removed from resin infusion tool **1401** by being connected to the infused part after it is cured. Connection seal **1410** and seal **1412** are both reusable multiple times.

Connection seal **1410** is a vulcanized end on an extruded seal, seal **1408.** Connection seal **1410** can be installed in a specific groove to seal against both a tool surface and adjacent seal extrusions, seal **1412** and seal **1408.** Connection seal **1410** achieves vacuum integrity and retains the resin during the various Gap-Infusion phases.

The illustrative examples present a three-surfaces joint where three independent seal lines converge. Seal **1408** is used to seal the edge of the vertical sides of the tool mandrels of lower mold **1404** and seal **1412** is installed in upper mold **1402** that closes the cavity.

All three surfaces converge in one single point where connection seal **1410** is located. Seal **1408** will deform and match with the vertical sides. Seal **1412** will contact connection seal **1410** to close the gap during vacuum and resin injection and compression phases. After the part comprising dry preform **1406** is cured, seal **1412** will return to its original shape and allow the part to be demolded without tearing or damaging the seal.

Connection seal **1410** enables the part removal and tool disassembly without having to clean resin infusion tool **1401.** Connection seal **1410** enables the part removal and tool disassembly without having to perform seal replacement. Connection seal **1410** can be used repeatedly.

In some illustrative examples, connection seal **1410** comprises vulcanized ends for vertical seals, such as seal **1408,** in one single piece. Connection seal **1410** can be installed either in the vertical seal ends, such as seal **1408,** or the upper seal, seal **1412** at matching locations with vertical seals. Connection seal **1410** can be vulcanized on inflatable extrusions.

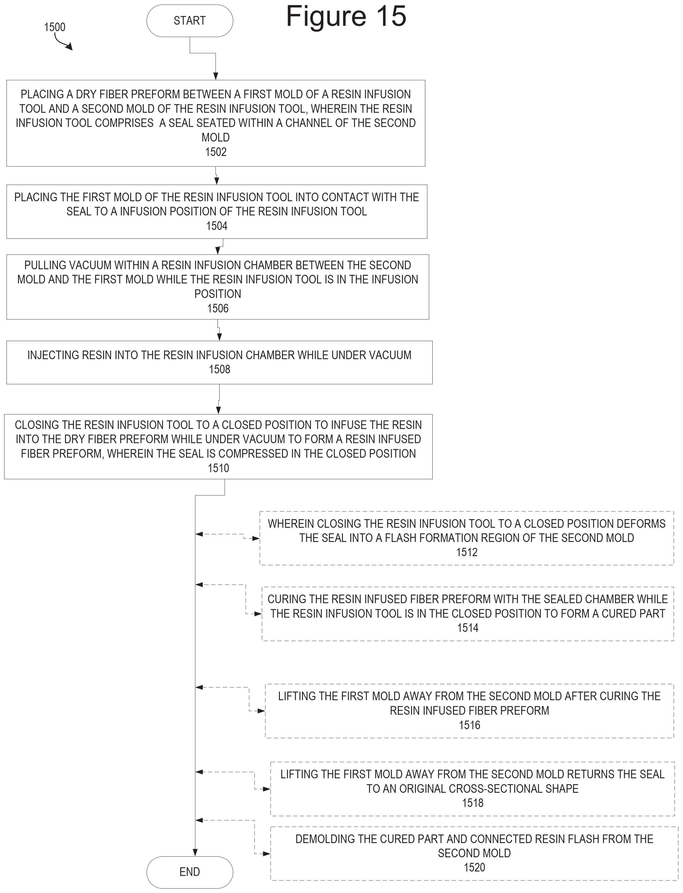

Turning now to **Figure 15****,** a flowchart of a method of resin transfer infusion is depicted in accordance with an illustrative embodiment. Method **1500** can be used to form a composite part of aircraft **100** of **Figure 1****.** Method **1500** can be performed using resin infusion tool **202** of **Figure 2****.** Method **1500** can be performed using resin infusion tool **300** of **Figures 3-8****.** Method **1500** can be performed using resin infusion tool **901** of **Figures 9-10****.** Method **1500** can be performed using resin infusion tool **1101** of **Figure 11****.** Method **1500** can be performed using resin infusion tool **1201** of **Figures 12-13****.** Method **1500** can be performed using resin infusion tool **1401** of **Figure 14****.**

Method **1500** places a dry fiber preform between a first mold of a resin infusion tool and a second mold of the resin infusion tool, wherein the resin infusion tool comprises a seal seated within a channel of the second mold (operation **1502**) Method **1500** places the first mold of the resin infusion tool into contact with the seal to a infusion position of the resin infusion tool (operation **1504**). Method **1500** pulls vacuum within a resin infusion chamber between the second mold and the first mold while the resin infusion tool is in the infusion position (operation **1506**).

Method **1500** injects resin into the resin infusion chamber while under vacuum (operation **1508**). Method **1500** closes the resin infusion tool to a closed position to infuse the resin into the dry fiber preform while under vacuum to form a resin infused fiber preform, wherein the seal is compressed in the closed position (operation **1510**). Afterwards, method **1500** terminates.

In some illustrative examples, closing the resin infusion tool to a closed position deforms the seal into a flash formation region of the second mold (operation **1512**). In some illustrative examples, method **1500** cures the resin infused fiber preform with the resin infusion chamber while the resin infusion tool is in the closed position to form a cured part (operation **1514**).

In some illustrative examples, method **1500** lifts the first mold away from the second mold after curing the resin infused fiber preform (operation **1516**). In some illustrative examples, lifting the first mold away from the second mold returns the seal to an original cross-sectional shape (operation **1518**). In some illustrative examples, method **1500** demolds the cured part and connected resin flash from the second mold (operation **1520).**

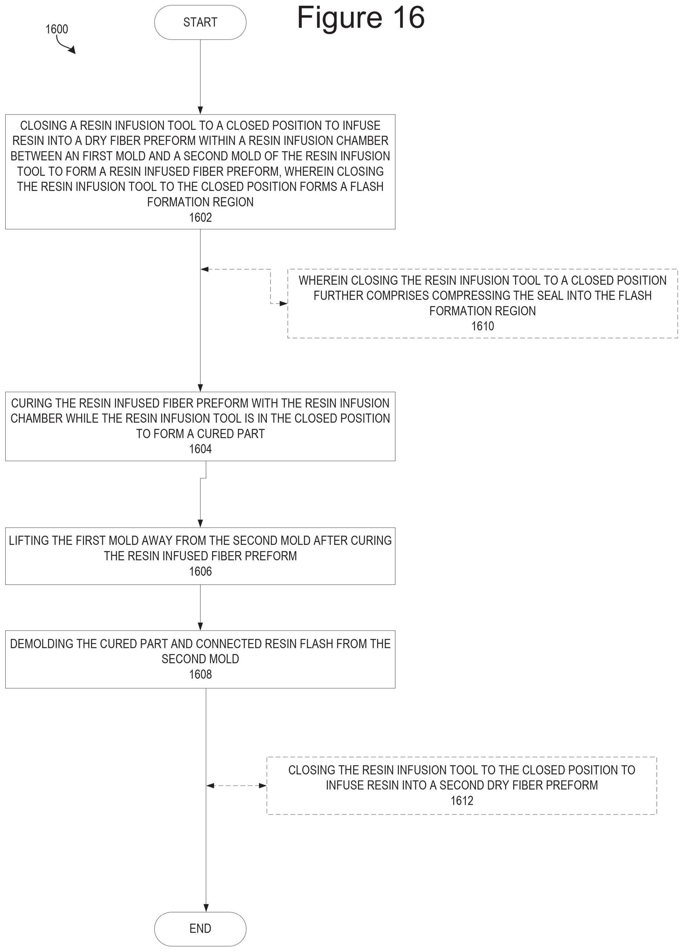

Turning now to **Figure 16****,** a flowchart of a method of maintaining a clean resin infusion tool is depicted in accordance with an illustrative embodiment. Method **1600** can be used to form a composite part of aircraft **100** of **Figure 1****.** Method **1600** can be performed using resin infusion tool **202** of **Figure 2****.** Method **1600** can be performed using resin infusion tool **300** of **Figures 3-8****.** Method **1600** can be performed using resin infusion tool **901 of** **Figures 9-10****.** Method **1600** can be performed using resin infusion tool **1101** of **Figure 11****.** Method **1600** can be performed using resin infusion tool **1201** of **Figures 12-13****.** Method **1600** can be performed using resin infusion tool **1401** of **Figure 14****.**

Method **1600** closes a resin infusion tool to a closed position to infuse resin into a dry fiber preform within a resin infusion chamber between a first mold and a second mold of the resin infusion tool to form a resin infused fiber preform, wherein closing the resin infusion tool to the closed position forms a flash formation region (operation **1602**).

Method **1600** curing the resin infused fiber preform with the resin infusion chamber while the resin infusion tool is in the closed position to form a cured part (operation **1604**).

Method **1600** lifts the first mold away from the second mold after curing the resin infused fiber preform (operation **1606**). Method **1600** demolds the cured part and connected resin flash from the second mold (operation **1608).** Afterwards, method **1600** terminates.

In some illustrative examples, closing the resin infusion tool to a closed position further comprises compressing a seal between the first mold and the second mold into the flash formation region (operation **1610**). In some illustrative examples, method **1600** closes the resin infusion tool to the closed position to infuse resin into a second dry fiber preform (operation **1612**).

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **1512** through operation **1520** may be optional. For example, operation operation **1612** may be optional.

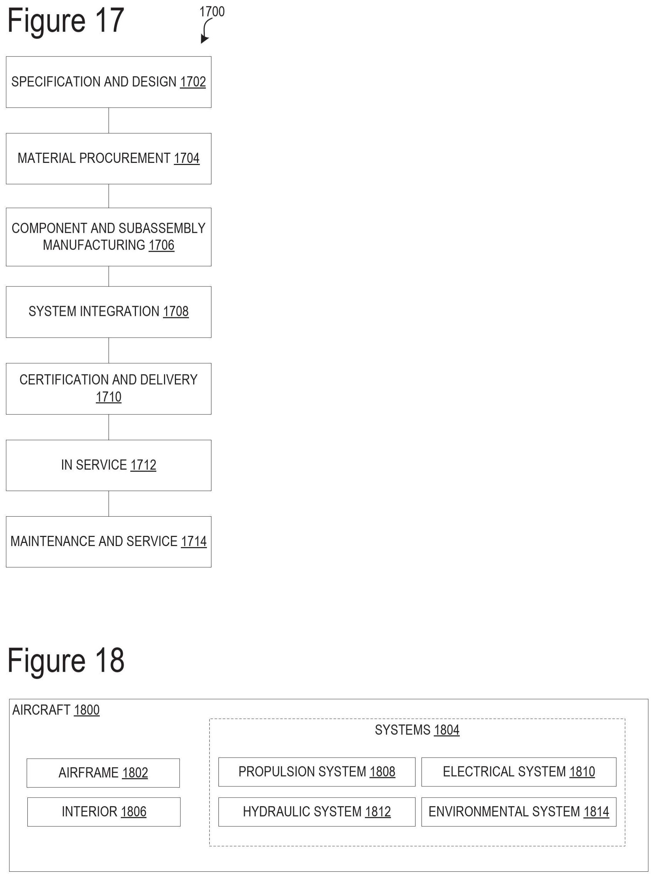

Illustrative embodiments of the present disclosure may be described in the context of aircraft manufacturing and service method **1700** as shown in **Figure 17** and aircraft **1800** as shown in **Figure 18****.** Turning first to **Figure 17****,** an illustration of an aircraft manufacturing and service method in a form of a block diagram is depicted in accordance with an illustrative embodiment. During pre-production, aircraft manufacturing and service method **1700** may include specification and design **1702** of aircraft **1800** in **Figure 18** and material procurement **1704.**

During production, component and subassembly manufacturing **1706** and system integration **1708** of aircraft **1800** takes place. Thereafter, aircraft **1800** may go through certification and delivery **1710** in order to be placed in service **1712.** While in service **1712** by a customer, aircraft **1800** is scheduled for routine maintenance and service **1714,** which may include modification, reconfiguration, refurbishment, or other maintenance and service.

Each of the processes of aircraft manufacturing and service method **1700** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 18****,** an illustration of an aircraft in a form of a block diagram is depicted in which an illustrative embodiment may be implemented. In this example, aircraft **1800** is produced by aircraft manufacturing and service method **1700** of **Figure 17** and may include airframe **1802** with plurality of systems **1804** and interior **1806.** Examples of systems **1804** include one or more of propulsion system **1808,** electrical system **1810,** hydraulic system **1812,** and environmental system **1814.** Any number of other systems may be included.

Apparatuses and methods embodied herein may be employed during at least one of the stages of aircraft manufacturing and service method **1700.** One or more illustrative embodiments may be manufactured or used during at least one of component and subassembly manufacturing **1706,** system integration **1708,** in service **1712,** or maintenance and service **1714** of **Figure 17****.**

Further, the current disclosure comprises embodiments according to the following clauses:
Clause 1. A seal configured to maintain pressure in at least two different positions comprising:
   a polymeric material in an extruded cross-sectional shape, the cross-sectional shape comprising a substantially flat first end and a projection opposite the substantially flat first end.
Clause 2. The seal of clause 1, wherein the cross-sectional shape comprises a pentagon in an uncompressed state, the pentagon comprising the substantially flat first end and the projection.
Clause 3. The seal of clause 1 or 2, wherein the cross-sectional shape comprises a base comprising the substantially flat first end and two substantially parallel sides.
Clause 4. The seal of any of clauses 1 to 3, wherein the projection comprises a rounded top.
Clause 5. The seal of any of clauses 1 to 4, wherein the projection comprises an angle between two top faces.
Clause 6. A resin infusion tool comprising:
   a first mold;
   a second mold configured to form a resin infusion chamber with the first mold, wherein the second mold comprises at least one channel around a perimeter of the second mold; and
   at least one seal seated within the at least one channel of the second mold, the at least one seal is seated so as to maintain a vacuum seal between the first mold and the second mold in both a infusion position and a closed position of the resin infusion tool, wherein the seal is in contact with the first mold in the infusion position, and wherein the seal is compressed in the closed position .
Clause 7. The resin infusion tool of clause 6, wherein the seal comprises a cross-sectional shape comprising a substantially flat first end and a projection opposite the substantially flat first end.
Clause 8. The resin infusion tool of clause 7 further comprising:
   at least one groove within the first mold configured to interface with the projection.
Clause 9. The resin infusion tool of clause 7 or 8, wherein the cross-sectional shape comprises a pentagon in an uncompressed state, the pentagon comprising the substantially flat first end and the projection.
Clause 10. The resin infusion tool of any of clauses 6 to 9, wherein a base of the seal has substantially the same cross-sectional shape as a cross-sectional shape of the channel.
Clause 11. The resin infusion tool of any of clauses 6 to 10, wherein a cross-sectional shape of seal comprises a base comprising a substantially flat first end and two substantially parallel sides.
Clause 12. The resin infusion tool of any of clauses 6 to 11, wherein the second mold has a flash formation region formed in close proximity to the first mold, and wherein the seal has a cross-sectional shape configured to compress into the flash formation region.
Clause 13. A method of resin transfer infusion comprising:
   placing a dry fiber preform between a first mold of a resin infusion tool and a second mold of the resin infusion tool, wherein the resin infusion tool comprises a seal seated within a channel of the second mold;
   placing the first mold of the resin infusion tool into contact with the seal to a infusion position of the resin infusion tool;
   pulling vacuum within a resin infusion chamber between the second mold and the first mold while the resin infusion tool is in the infusion position;
   injecting resin into the resin infusion chamber while under vacuum; and
   closing the resin infusion tool to a closed position to infuse the resin into the dry fiber preform while under vacuum to form a resin infused fiber preform, wherein the seal is compressed in the closed position.
Clause 14. The method of clause 13 further comprising:
   curing the resin infused fiber preform with the resin infusion chamber while the resin infusion tool is in the closed position to form a cured part.
Clause 15. The method of clause 14 further comprising:
   lifting the first mold away from the second mold after curing the resin infused fiber preform; and
   demolding the cured part and connected resin flash from the second mold.
Clause 16. The method of clause 15, wherein closing the resin infusion tool to a closed position deforms the seal into a flash formation region of the second mold.
Clause 17. The method of clause 15 or 16, lifting the first mold away from the second mold returns the seal to an original cross-sectional shape.
Clause 18. A method of maintaining a clean resin infusion tool comprising:
   closing a resin infusion tool to a closed position to infuse resin into a dry fiber preform within a resin infusion chamber between an first mold and a second mold of the resin infusion tool to form a resin infused fiber preform, wherein closing the resin infusion tool to the closed position forms a flash formation region;
   curing the resin infused fiber preform with the resin infusion chamber while the resin infusion tool is in the closed position to form a cured part;
   lifting the first mold away from the second mold after curing the resin infused fiber preform; and
   demolding the cured part and connected resin flash from the second mold.
Clause 19. The method of clause 18, wherein closing the resin infusion tool to a closed position further comprises compressing a seal between the first mold and the second mold into the flash formation region.
Clause 20. The method of clause 18 or 19 further comprising:
   closing the resin infusion tool to the closed position to infuse resin into a second dry fiber preform.

The illustrative examples provide a tool-seal solution that enables Gap-Resin Infusion processing. The Gap-Resin Infusion process utilizes the tool in a partially closed position, also known as a infusion position, while achieving vacuum (negative pressure). In some illustrative examples, in the partially closed position, the gap can be in the range of 2-5mm. Compression is started after filling the gap with resin. The compression provides positive pressure. The resin infusion tool is sealed against vacuum or resin leaks during this process.

The illustrative examples provide a seal with a cross-section configured to enable a "soft" contact during the vacuum phase. The seal is configured to ensure no leaks occur during injection phase by enabling the seal to deform and fill the groove.

In the illustrative examples, the seal ensures that the resin flash will come off with the part after it is cured. The seal is reusable multiple times. The extruded seal design prevents the resin from flowing inside the channel or the groove and thus creating thin resin flash debris.

The extruded cross section will deform and fill an engineered groove where the seal will be hosted preventing the resin to flow inside the groove.

After the part is cured, the seal will return to its original shape and allow the part to be demolded without tearing or damaging the seal.

The seal extrusion prevents resin and vacuum leaks and is suited for RTM applications. Extrusion ends will be vulcanized to create one single "ring" seal.

Although the illustrative examples present a solid seal extrusion with a specific cross section, in some illustrative examples, the extrusion can use inflatable seals which can improve the seal lifespan.

The illustrative examples enable the part removal without the need to clean the tool. The illustrative examples can be used multiple times.

The illustrative examples also provide a seal-seal joint solution that enables Gap-Resin Infusion processing where movable curing mandrels are included in the tool.

The illustrative examples enable complex seal joints to work under typical Gap-Resin Infusion processing. The illustrative examples provide a molded seal end for an extrusion that physically connects with the main Gap Seal in the tool during vacuum, infusion and compression cycles. The molded seal will be vulcanized to one end of an extrusion and provides a continuation of the tool surface where tools are split due to other technology constraints.

The molded connection seal will also ensure that the resin flash will come off with the part after it is cured. The molded connection seal shall be reusable multiple times. The key aspect of the design is the ability of the molded seal to achieve vacuum integrity and retain the resin during the various Gap-Infusion phases.

Herein proposed is a three-surfaces joint where three independent seal lines converge. The so-called vertical seal is used to seal the edge of the vertical sides of the mandrels and the upper seal is installed in the upper mold that closes the cavity. All three surfaces converge in one single point where the molded connection seal is located.

After the part is cured, the seal will return to its original shape and allow the part to be demolded without tearing or damaging the connection seal. The illustrative examples will enable the part removal and tool disassembly without the need to clean the tool and seal replacement. The connection seal will be used multiple times.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A seal (208, 308, 908, 1108, 1210, 1412) configured to maintain pressure in at least two different positions (240, 242) comprising:
a polymeric material (213) in an extruded (215) cross-sectional shape (218), the cross-sectional shape (218) comprising a substantially flat first end (222, 318) and a projection (216, 316, 914, 1112) opposite the substantially flat first end (222, 318).

2. The seal (208, 308, 908, 1108, 1210, 1412) of claim 1, wherein the cross-sectional shape comprises a pentagon (220) in an uncompressed state, the pentagon (220) comprising the substantially flat first end (222, 318) and the projection (216, 316, 914, 1112).

3. The seal (208, 308, 908, 1108, 1210, 1412) of claim 1 or 2, wherein the cross-sectional shape comprises a base (214, 320, 916, 1114) comprising the substantially flat first end (222, 318) and two substantially parallel sides (226).

4. The seal (208, 308, 908, 1108, 1210, 1412) of any of claims 1 to 3, wherein the projection (216, 316, 914, 1112) comprises a rounded top; or wherein the projection (216, 316, 914, 1112) comprises an angle between two top faces.

5. A resin infusion tool (202, 300, 901, 1101, 1201, 1401) comprising:
a first mold (204);
a second mold (206) configured to form a resin (238, 502, 1004) infusion chamber with the first mold (204), wherein the second mold (206) comprises at least one channel (210, 310, 906, 1106) around a perimeter of the second mold (206); and
at least one seal (208, 308, 908, 1108, 1210, 1412) seated within the at least one channel (210, 310, 906, 1106) of the second mold (206), the at least one seal (208, 308, 908, 1108, 1210, 1412) is seated so as to maintain a vacuum seal (230) between the first mold (204) and the second mold (206) in both a infusion position (240, 402) and a closed position (242, 602, 1006, 1302) of the resin infusion tool (202, 300, 901, 1101, 1201, 1401), wherein the seal (208, 308, 908, 1108, 1210, 1412) is in contact with the first mold (204) in the infusion position, and wherein the seal (208, 308, 908, 1108, 1210, 1412) is compressed in the closed position (242, 602, 1006, 1302).

6. The resin infusion tool (202, 300, 901, 1101, 1201, 1401) of claim 5, wherein the seal (208, 308, 908, 1108, 1210, 1412) comprises a cross-sectional shape (218) comprising a substantially flat first end (222, 318) and a projection (216, 316, 914, 1112) opposite the substantially flat first end (222, 318).

7. The resin infusion tool (202, 300, 901, 1101, 1201, 1401) of claim 6 further comprising:
at least one groove (228, 312, 910, 1110) within the first mold (204) configured to interface with the projection (216, 316, 914, 1112).

8. The resin infusion tool (202, 300, 901, 1101, 1201, 1401) of claim 6 or 7, wherein the cross-sectional shape (218) comprises a pentagon (220) in an uncompressed state, the pentagon (220) comprising the substantially flat first end (222, 318) and the projection (216, 316, 914, 1112).

9. The resin infusion tool (202, 300, 901, 1101, 1201, 1401) of any of claims 5 to 8, wherein a base of the seal has substantially the same cross-sectional shape as a cross-sectional shape of the channel.

10. The resin infusion tool (202, 300, 901, 1101, 1201, 1401) of any of claims 5 to 9, wherein a cross-sectional shape of seal (208, 308, 908, 1108, 1210, 1412) comprises a base (214, 320, 916, 1114) comprising a substantially flat first end (222, 318) and two substantially parallel sides (226); or wherein the second mold (206) has a flash formation region (234) formed in close proximity to the first mold (204), and wherein the seal (208, 308, 908, 1108, 1210, 1412) has a cross-sectional shape (218) configured to compress into the flash formation region (234).

11. A method (1500) of resin (238, 502, 1004) transfer infusion comprising:
placing (1502) a dry fiber preform (236) between a first mold (204) of a resin infusion tool (202, 300, 901, 1101, 1201, 1401) and a second mold (206) of the resin infusion tool (202, 300, 901, 1101, 1201, 1401), wherein the resin infusion tool (202, 300, 901, 1101, 1201, 1401) comprises a seal seated within a channel (210, 310, 906, 1106) of the second mold (206);
placing (1504) the first mold (204) of the resin infusion tool (202, 300, 901, 1101, 1201, 1401) into contact with the seal (208, 308, 908, 1108, 1210, 1412) to a infusion position (240, 402) of the resin infusion tool (202, 300, 901, 1101, 1201, 1401);
pulling (1506) vacuum within a resin (238, 502, 1004) infusion chamber between the second mold (206) and the first mold (204) while the resin infusion tool (202, 300, 901, 1101, 1201, 1401) is in the infusion position (240, 402);
injecting (1508) resin (238, 502, 1004) into the resin (238, 502, 1004) infusion chamber while under vacuum; and
closing (1510) the resin infusion tool (202, 300, 901, 1101, 1201, 1401) to a closed position (242, 602, 1006, 1302) to infuse the resin (238, 502, 1004) into the dry fiber preform (236) while under vacuum to form a resin (238, 502, 1004) infused fiber preform, wherein the seal (208, 308, 908, 1108, 1210, 1412) is compressed in the closed position (242, 602, 1006, 1302).

12. The method (1500) of claim 11 further comprising:
curing (1514) the resin (238, 502, 1004) infused fiber preform with the resin (238, 502, 1004) infusion chamber while the resin infusion tool (202, 300, 901, 1101, 1201, 1401) is in the closed position (242, 602, 1006, 1302) to form a cured part.

13. The method of claim 12 further comprising:
lifting the first mold away from the second mold after curing the resin infused fiber preform; and
demolding the cured part and connected resin flash from the second mold.

14. A method (1600) of maintaining a clean resin infusion tool (202, 300, 901, 1101, 1201, 1401) comprising:
closing (1602) a resin infusion tool (202, 300, 901, 1101, 1201, 1401) to a closed position (242, 602, 1006, 1302) to infuse resin (238, 502, 1004) into a dry fiber preform within a resin infusion chamber between an first mold (204) and a second mold (206) of the resin infusion tool (202, 300, 901, 1101, 1201, 1401) to form a resin infused fiber preform, wherein closing the resin infusion tool (202, 300, 901, 1101, 1201, 1401) to the closed position (242, 602, 1006, 1302) forms a flash formation region (234);
curing (1604) the resin (238, 502, 1004) infused fiber preform with the resin (238, 502, 1004) infusion chamber while the resin infusion tool (202, 300, 901, 1101, 1201, 1401) is in the closed position (242, 602, 1006, 1302) to form a cured part;
lifting (1606) the first mold (204) away from the second mold (206) after curing the resin (238, 502, 1004) infused fiber preform; and
demolding (1608) the cured part and connected resin (238, 502, 1004) flash (254, 704) from the second mold (206).

15. The method of claim 14, wherein closing the resin infusion tool to a closed position further comprises compressing a seal between the first mold and the second mold into the flash formation region; or
wherein the method comprises closing the resin infusion tool to the closed position to infuse resin into a second dry fiber preform.
